# FASCICULE DE BREVET EUROPEEN

(11) **EP 2 913 629 B1**
(45) Date de publication et mention de la délivrance du brevet: **23.11.2016**
(21) Numéro de dépôt: 15152759.5
(22) Date de dépôt: 27.01.2015
(51) Int. Cl.: G01B 5/12, G01B 5/20, G01B 5/25

(54) **Mesure de caractéristiques dimensionnelles d'une pièce de production**
Messung der Maßeigenschaften eines Produktionsartikels
Measurement of dimensional characteristics of a production part

(30) Priorité: 03.02.2014 FR 1400300
(43) Date de publication de la demande: 02.09.2015
(73) Titulaire: Safran Landing Systems, 78140 Vélizy-Villacoublay (FR)
(72) Inventeur: Dastugue, Jean-Benoit, 78140 Velizy Villacoubaly (FR); Couchinave, Jean-Claude, 78140 Velizy Villacoubaly (FR); Elizalde, Xavier, 78140 Velizy Villacoubaly (FR)
(74) Mandataire: Parzy, Benjamin Alain

(56) Documents cités:
- GB-A- 167 869
- GB-A- 2 200 456

## Description

L'invention concerne le domaine de la mesure de caractéristiques dimensionnelles d'une pièce de production. Les lignes de production permettent de produire des pièces dites pièces de production. Dans un souci de respect des cotations dimensionnelles des pièces de production, on mesure certaines cotes de la pièce de production à l'aide d'outils de mesure.

Ainsi, l'invention concerne un outil de mesure de caractéristiques dimensionnelles d'une pièce de production, cet outil comportant :
- des moyens de positionnement de l'outil de mesure par rapport à la pièce de production ; et
- au moins un appareil de mesure relié mécaniquement aux moyens de positionnement par des moyens de liaison mécanique entre ledit au moins un appareil de mesure et les moyens de positionnement. Des outils de mesure sont connus des documents GB2200456 et GB167869.

### OBJET DE L'INVENTION

Un objet de la présente invention est de fournir un outil de mesure facilement positionnable par rapport à une pièce de production pour pouvoir mesurer au moins une caractéristique dimensionnelle de la pièce de production.

### RESUME DE L'INVENTION

Pour adresser cet objet, il est proposé selon l'invention, un outil de mesure de caractéristiques dimensionnelles d'une pièce de production, cet outil comportant :
- des moyens de positionnement de l'outil de mesure par rapport à la pièce de production ;
- au moins un appareil de mesure relié mécaniquement aux moyens de positionnement par des moyens de liaison mécanique entre ledit au moins un appareil de mesure et les moyens de positionnement.

Cet outil selon l'invention est essentiellement caractérisé en ce que les moyens de positionnement de l'outil de mesure comportent :
- des premiers moyens de centrage de l'outil adaptés à venir en contact contre une surface interne d'un premier alésage cylindrique de la pièce de production de manière à être centrés vis-à-vis de ce premier alésage;
- des seconds moyens de centrage de l'outil adaptés à venir en contact contre une surface interne d'un second alésage cylindrique de la pièce de production de manière à être centrés vis-à-vis de ce second alésage, ces premier et second alésages étant coaxiaux ; et en ce que
les moyens de liaison mécanique sont agencés pour autoriser le déplacement relatif de l'appareil de mesure par rapport aux premiers et seconds moyens de centrage de manière que ledit au moins un appareil de mesure puisse palper successivement plusieurs points d'au moins une des surfaces internes des premier ou second alésages alors que ces premiers et seconds moyens de centrage sont en contact contre les surfaces internes respectives de ces premier et second alésages et positionnent l'outil par rapport à la pièce de production.

Cet outil peut être simplement positionné rapport à la pièce par mise en contact de premiers et seconds moyens de centrage contre les premier et second alésages respectifs de la pièce de production. Une fois ce positionnement réalisé les premier et seconds moyens de centrage sont respectivement centrés sur les premier et second alésages respectifs et ledit au moins un appareil de mesure peut alors être déplacé par rapport à la pièce de production, et dans la limite du déplacement autorisé par les moyens de liaison mécanique entre l'appareil de mesure et les moyens de positionnement de l'outil. Ce déplacement est tel que l'appareil de mesure peut être déplacé pour venir palper successivement plusieurs points d'au moins une des surfaces internes des premier ou second alésages de la pièce de production.

Grâce à ces caractéristiques, l'outil de mesure peut être positionné dans deux alésages distincts et coaxiaux entre eux de la pièce ce qui augmente la précision du positionnement de l'outil lors du palpage de points de l'un au moins de ces alésages.

L'outil de mesure selon l'invention permet de positionner l'appareil de mesure vis-à-vis de la pièce pour pouvoir définir des zones de mesures dans l'un au moins des alésages de la pièce. Un opérateur peut ainsi réaliser des mesures de caractéristiques dimensionnelles de pièces de production en positionnant simplement l'outil de mesure sur la pièce, et en déplacement de l'appareil de mesure vers les zones de palpage autorisés par les moyens de liaison entre appareil de mesure et moyens de positionnement.

Ainsi une fois positionné sur la pièce, l'outil de mesure détermine une zone de mesure possible permettant de guider l'opérateur dans l'opération de palpage.

Idéalement, les moyens de positionnement sont adaptés pour que lorsque les premiers et seconds moyens de centrage sont respectivement centrés contre les premier et second alésages, alors l'outil de mesure est alors fixé sur la pièce de production et exclusivement porté par cette dernière. Ceci permet de limiter les degrés de liberté possibles entre l'outil et la pièce de production et aussi limiter le risque de fausser des mesures.

L'invention concerne aussi un ensemble comportant l'outil de mesure selon l'un quelconque des modes de réalisation ci-décrits et ladite pièce de production. Dans cet ensemble selon l'invention, les premiers moyens de centrage de l'outil sont en contact contre la surface interne du premier alésage, préférentiellement cylindrique, de la pièce de production de manière à être centrés vis-à-vis de ce premier alésage et les seconds moyens de centrage de l'outil sont en contact contre la surface interne du second alésage, préférentiellement cylindrique, de la pièce de production de manière à être centrés vis-à-vis de ce second alésage qui est coaxial du premier alésage. Par ailleurs, toujours dans cet ensemble selon l'invention, ledit au moins un appareil de mesure est placé entre les premier et second alésages et entre lesdits premiers et seconds moyens de centrage, lesdits moyens de liaison mécanique entre ledit au moins un appareil de mesure et les moyens de positionnement étant adaptés à déplacer l'appareil de mesure entre ces premier et second alésages pour qu'il puisse palper successivement plusieurs points alignés dans un même plan d'alignement et appartenant à au moins une desdites surfaces internes.

Cet ensemble selon l'invention permet la mesure de caractéristiques dimensionnelles de la pièce et présente par conséquent les mêmes avantages que ceux énoncés en référence à l'outil de mesure selon l'invention.

Toujours pour adresser l'objet précité de l'invention, l'invention concerne également un procédé pour mesurer des caractéristiques dimensionnelles de premier et second alésages cylindriques coaxiaux formés dans une pièce de production, ces alésages étant disposés de part et d'autre d'une zone évidée de la pièce de production et chacun de ces alésages débouchant d'une part dans cette zone évidée et d'autre part à la périphérie de la pièce de production, le procédé comprenant :
a) le positionnement, par rapport à la pièce de production, de l'outil de mesure selon l'un quelconque des modes de réalisations ci-avant ou ci-après décrits, de manière que :
   - les premiers moyens de centrage de l'outil soient en contact contre une surface interne du premier alésage préférentiellement cylindrique; que
   - les seconds moyens de centrage de l'outil soient en contact contre une surface interne d'un second alésage préférentiellement cylindrique ; puis
b) le déplacement de l'appareil de mesure par rapport à la pièce de production alors que cet appareil de mesure est relié aux moyens de positionnement par lesdits moyens de liaison mécanique et alors que les premiers et seconds moyens de centrage sont fixement positionnés par rapport à la pièce de production, ce déplacement étant tel que des moyens de palpage appartenant audit au moins un appareil de mesure palpent une succession de points appartenant à l'une des surfaces internes des premier ou second alésages, ces points palpés s'étendant dans un même plan de palpage.

Selon le cas, ce plan de palpage est parallèle ou perpendiculaire à l'axe de guidage. En l'occurrence :
- si l'appareil est déplacé par rapport à la pièce et aux premiers et seconds moyens de centrage en coulissant le long de l'axe de guidage alors le plan de palpage est parallèle à cet axe de guidage;
- si l'appareil est déplacé par rapport à la pièce et aux premiers et seconds moyens de centrage en pivotant autour de l'axe de guidage alors le plan de palpage est perpendiculaire à l'axe de guidage.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels :

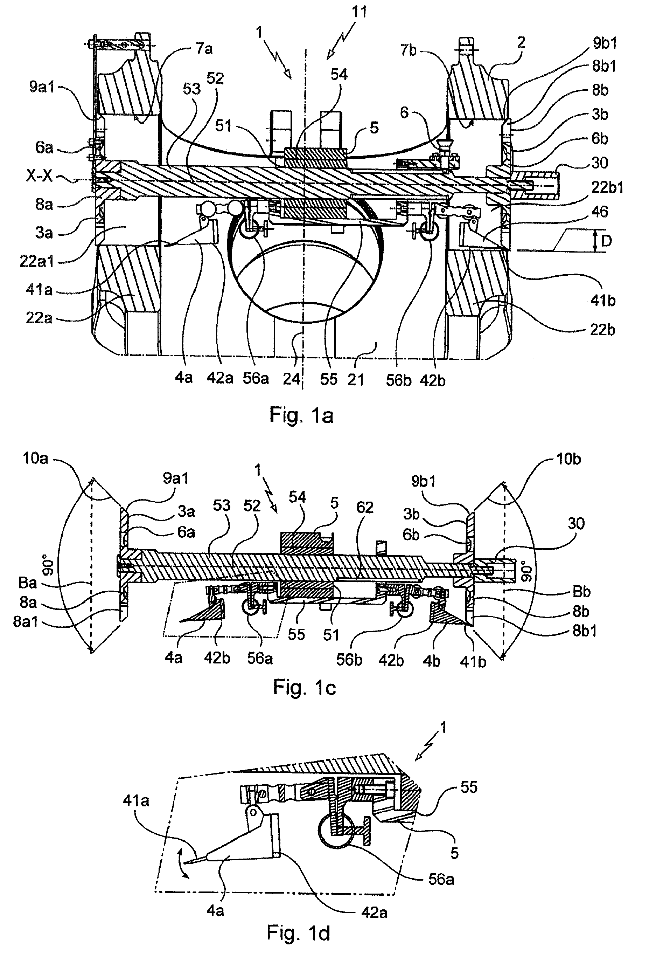

- la figure 1a décrit une vue en coupe transversale de l'ensemble selon l'invention qui comporte une pièce de production dont on veut mesurer des caractéristiques dimensionnelles et un outil de mesure de ces caractéristiques;
- 1a figure 1c est une vue en coupe longitudinale de l'outil selon l'invention illustré à la figure 1a;
- la figure 1d est une vue de détail d'une partie des moyens mécaniques utilisés pour relier un appareil de mesure aux moyens de positionnement de l'outil par rapport à la pièce de production ;
- la figure 1b est une vue en coupe longitudinale de l'ensemble illustré à la figure 1a alors que les appareils de mesure ont été translatés selon un axe de guidage et pivotés autour de cet axe de guidage pour palper différents points d'alésages de la pièce ;
- la figure 1e est une vue en coupe transversale d'une portion de l'outil de mesure selon l'invention où l'on voit des moyens d'indexation en position, ici des moyens d'indexation en rotation, pour indexer à rotation les appareils de mesure par rapport à la pièce de production et par rapport aux moyens de positionnement de l'outil de mesure ;
- la figure 2 est une vue en perspective de l'ensemble selon l'invention alors que l'un des appareils de mesure est disposé pour palper des points d'une surface interne d'un des alésages coaxiaux et cylindriques réalisés au travers de la pièce de production ;
- la figure 2a est une vue en coupe d'une partie des moyens de positionnement de l'outil de mesure par rapport à la pièce, cette partie permettant d'orienter fixement l'outil par rapport aux alésages de la pièce.

### DESCRIPTION DETAILLEE DE L'INVENTION

Comme indiqué précédemment, il est proposé selon l'invention un outil de mesure 1 pour mesurer des caractéristiques dimensionnelles D d'une pièce de production 2. En l'occurrence, la pièce de production 2 est une tige principale d'un atterrisseur d'aéronef formée d'un tube à une extrémité duquel s'étend une fourche à deux branches 22a, 22b. Ces branches 22a, 22b présentent chacune un alésage 22a1, 22b1 pour permettre le passage d'un pivot de balancier de l'atterrisseur.

On note aussi que chaque alésage 22a1, 22b1 débouche de part et d'autre de la branche 22a, 22b dans laquelle il est réalisé, c'est-à-dire qu'il débouche d'un côté dans la zone évidée 21 située entre les branches 22a, 22b et de l'autre à la périphérie 23 de la pièce 2. Ces alésages 22a1, 22b1 sont coaxiaux entre eux et s'étendent selon un axe X-X qui est perpendiculaire à un axe principal 24 selon lequel s'étend la pièce de production 2. On note que l'axe principal 24 est l'axe selon lequel s'étend le tube de la pièce 2.

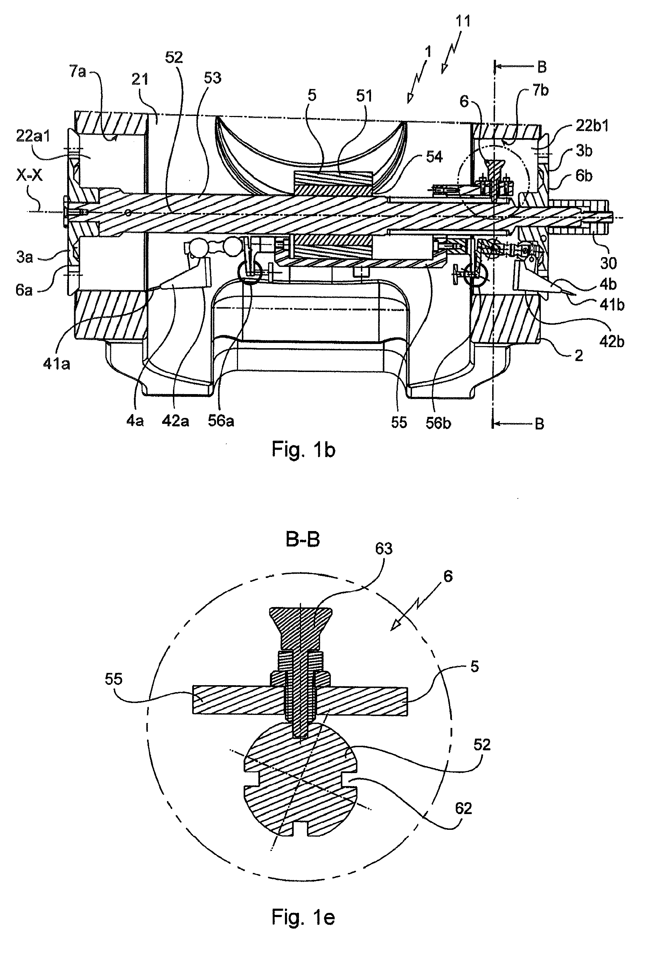

Comme on le voit sur les figures 1a, 1b, 1c, l'outil de mesure 1 selon l'invention présente :
- des moyens de positionnement 3a, 3b de l'outil par rapport à la pièce de production 2 ;
- deux appareils de mesure 4a, 4b relié mécaniquement aux moyens de positionnement par des moyens de liaison mécanique 5 entre ces appareils de mesure 4a, 4b et les moyens de positionnement 3a, 3b.

Chacun de ces appareils de mesure 4a, 4b est connu sous le nom de comparateurs et est agencé pour mesurer un déplacement relatif d'un palpeur mécanique par rapport à un corps 42a, 42b de comparateur.

Les moyens de positionnement 3a, 3b de l'outil de mesure 1 comportent :
- des premiers moyens de centrage 6a adaptés à venir en contact contre la surface interne annulaire 7a du premier alésage cylindrique 22b1 de la pièce de production 2; et
- des seconds moyens de centrage 6b adaptés à venir en contact contre la surface interne annulaire 7b du second alésage cylindrique 22b2 de la pièce de production 2.

Les premiers moyens de centrage 6a présentent une première pièce d'appui 8a dotée de surfaces d'appui 9a1, 9a2 agencées pour pouvoir venir en appui contre la surface interne 7a dudit premier alésage 22b1.

De même les seconds moyens de centrage 6b présentent une seconde pièce d'appui 8b dotée surfaces d'appui 9b1 agencées pour venir en appui contre la surface interne annulaire 7b du second alésage 22b2.

En l'occurrence, la première pièce d'appui 8a comporte plusieurs surfaces d'appui 9a1, 9a2 appartenant à un même premier tronc de cône 10a formé par cette première pièce 8a. De même la seconde pièce d'appui 8b comporte plusieurs surfaces d'appui 9b1 appartenant à un même second tronc de cône 10b coaxial du premier tronc de cône. Ces première et seconde pièces d'appui 8a, 8b sont orientées l'une par rapport à l'autre de manière à être disposées entre les bases respectives Ba, Bb des premier et second troncs de cônes 10a, 10b.

La première pièce d'appui 8a présente des échancrures périphériques 8a1 disposées entre certaines au moins des surfaces d'appui 9a1, 9a2, ces échancrures 8a1 sont disposées à la périphérie de cette première pièce 8a de manière à permettre le passage au travers de certaines au moins de ces échancrures 8a1, d'un palpeur mécanique 41a appartenant au premier appareil de mesure 4a.

De même, la seconde pièce d'appui 8b présente des échancrures périphériques 8b1 disposées entre certaines des surfaces d'appui 9b1, ces échancrures 8b1 sont disposées à la périphérie de cette seconde pièce 8b de manière à permettre le passage au travers de certaines au moins de ces échancrures 8b1, d'un palpeur mécanique 41b appartenant au second appareil de mesure 4b.

Pratiquement, chaque première ou seconde pièce d'appui 8a, 8b a la forme d'un disque présentant un chanfrein annulaire s'étendant suivant un tronc de cône d'appui 10a, 10b. Les échancrures périphériques 8a1, 8b1 ont préférentiellement toutes la même forme et sont réparties de manière homogène à la périphérie du disque de manière que chaque échancrure soit placée entre deux portions chanfreinées du disque. Par cette forme, chaque surface d'appui 9a, 9a2, 9b1 d'un disque s'étend selon un tronc de cône permettant à la pièce d'appui 8a, 8b de se centrer par rapport à l'alésage correspondant 22a1, 22b1. En effet, lorsque la surface d'appui 9a1, 9a2, 9b1 conique de pièce d'appui 8a, 8b est forcée contre la surface interne correspondante 7a, 7b de l'alésage 22a1, 22b1 de la pièce, elle a tendance à positionner le disque de manière que son centre devienne coaxial de l'axe X-X de l'alésage. En l'occurrence chaque pièce d'appui vient en contact et se centre contre une base circulaire appartenant à la surface interne 7a, 7b de l'alésage 22a1, 22b1 qui lui correspond.

Pour permettre ce centrage, les moyens de positionnement 3a, 3b de l'outil de mesure 1 comportant des moyens de serrage 30 agencés pour exercer un effort de serrage des première et seconde pièces d'appui 8a, 8b de manière que la pièce de production 2 puisse être serrée entre ces première et seconde pièces d'appui 8a, 8b alors que ces première et seconde pièces d'appui sont respectivement en appui contre les surfaces internes 7a, 7b des premier et second alésages 22a1 et 22b1 correspondants.

Ici, les moyens de serrage comportent une tige 53 s'étendant entre les pièces d'appui 8a, 8b en forme de disque, cette tige s'étendant perpendiculairement aux plans selon lesquels s'étendent ces pièce d'appui qui sont parallèles entre elles et coaxiales. Cette tige 53 de serrage passe par les centres respectifs de ces disques des pièces d'appui 8a, 8b. La première pièce d'appui 8a est liée à la tige des moyens de serrage par une liaison en encastrement. A contrario, la seconde pièce d'appui 8b est liée à la tige 53 par une liaison glissière pour que cette seconde pièce d'appui 8b puisse coulisser par rapport à une portion d'extrémité de la tige 53. L'extrémité de cette tige des moyens de serrage sur laquelle coulisse la seconde pièce d'appui 8b est en partie filetée pour recevoir un écrou 30 permettant de serrer à l'aide de la tige, la pièce de production 2 entre les première et seconde pièces d'appui 8a, 8b.

Les moyens de liaison mécanique 5 entre les appareils de mesure 4a, 4b et les moyens de positionnement 3a, 3b comportent un guide 51 définissant un axe de guidage 52 agencé pour guider le déplacement dudit au moins un appareil de mesure 4a, 4b le long de l'axe de guidage 52 et/ou pour guider en rotation le déplacement du ou des appareils de mesure 4a, 4b autour dudit axe de guidage 52. L'axe de guidage 52, ici constitué par un profil externe cylindrique de la tige 53, est coaxial des premier et second troncs de cônes 10a, 10b, ce qui permet d'avoir un axe de guidage 52 sensiblement coaxial à l'axe X-X des alésages 22a1, 22b1. Ce guide 51 est ici formé par la portion centrale de la tige de serrage 53 qui est cylindrique et droite.

Les moyens de liaison mécanique 5 comportent un manchon 54 adapté à coulisser le long de l'axe de guidage 52 et à pivoter autour de cet axe de guidage 52. Ce manchon 54 est une sorte de palier ajusté par rapport à la tige cylindrique droite 53 de manière guider le manchon 54 pour qu'il coulisse et tourne le long et autour de cette tige de guidage et entre les première et seconde pièces d'appui 8a, 8b.

Une platine 55 à laquelle sont assemblés les corps 42a, 42b des appareils de mesure 4a, 4b est elle-même reliée fixement à ce manchon 54 et à un moyen d'indexation à rotation 6.

Les moyens d'indexation 6 sont agencés pour indexer à rotation ledit au moins un appareil de mesure 4a, 4b autour de l'axe de guidage 52 tout en autorisant son coulissement le long de ce dit axe de guidage 52 de manière que l'appareil de mesure puisse palper plusieurs points de la surface interne de l'alésage 22a1, 22b1 correspondant. On note que grâce à ces moyens d'indexation, les points palpés sont ainsi alignés entre eux et sont placés dans un même plan d'orientation dans lequel s'étend l'axe de guidage. Les moyens de liaison mécanique 5 sont ainsi agencés pour autoriser le déplacement relatif de chacun des appareils de mesure 4a, 4b par rapport aux premiers et seconds moyens de centrage de manière que chaque au moins un appareil de mesure 4a, 4b puisse palper successivement plusieurs points d'au moins une des surfaces internes 7a, 7b alors que ces premiers et seconds moyens de centrage 6a, 6b sont en contact contre ces surfaces internes respectives et positionnent l'outil 1 par rapport à la pièce de production 2. Les moyens d'indexation permettent de réaliser une indexation telle que les moyens de palpage des appareils de mesure peuvent passer au travers des échancrures 8a1, 8b1 sans risquer de venir en contact contre les pièces d'appui 8a, 8b. On évite ainsi des risques de dégradation des appareils 4a, 4b.

Pour la compréhension de l'invention, la notion de palpage réalisée par un appareil de mesure 4a, 4b sur une surface 7a, 7b peut comprendre :
- le palpage avec contact mécanique consistant à mettre en contact un palpeur mécanique 41a, 41b de l'appareil de mesure contre la surface de la pièce afin de mesurer une distance ou variation de distance entre un point palpé de la surface et une référence de l'appareil de mesure ; et/ou
- le palpage sans contact mécanique consistant à mesurer la distance ou la variation de distance entre une référence de l'appareil de mesure et un point palpé, à l'aide d'ondes ou signaux qui interfèrent avec un point de la surface.

Les moyens d'indexation 6 sont agencés pour définir plusieurs positions d'orientation de chaque au moins un appareil de mesure 4a, 4b par rapport à l'axe de guidage 52, ces positions d'orientation étant disposées autour de l'axe de guidage 52. Comme on le voit sur la vue en coupe de la figure 1e, les moyens d'indexation 6 comportent quatre rainures 62 longitudinales réparties à 90° autour et le long de l'axe de guidage 52. Les moyens d'indexation 6 comportent aussi une tige 63 d'arrêt en rotation assujettie à la platine 55 et mobile par rapport à celle-ci pour pouvoir sélectivement pénétrer dans une de ces rainures 62 devant laquelle elle est en vis-à-vis.

Lorsque l'opérateur déplace la tige 63 pour l'insérer dans une des rainures 62, la platine et les appareils 4a, 4b qu'elle porte peuvent uniquement coulisser le long de l'axe 52 sans pouvoir pivoter autour de cet axe 52. Lorsque la tige 63 est écartée de la rainure 62, la platine 55 et les appareils peuvent alors coulisser et pivoter librement par rapport à l'axe 52.

Ainsi, du fait de l'indexation de l'appareil de mesure dans une de ses positions d'orientation possibles autour de l'axe de guidage, on peut délimiter les zones de palpage des surfaces internes 7a, 7b accessibles aux appareils de mesure 4a, 4b. On note que pour chaque appareil de mesure, la zone de palpage s'étend sur toute la longueur de l'alésage 22a1, 22b1 qui lui correspond.

Comme il existe plusieurs positions possibles d'indexation de l'appareil de mesure autour de l'axe de guidage 52, l'utilisateur peut choisir, la zone à palper de la surface interne 7a, 7b choisie.

L'outil de mesure 1 permet ainsi de prédéfinir plusieurs orientations fixes de l'appareil de guidage par rapport à l'alésage à palper et il peut être utilisé pour définir un protocole de mesures répétable sur plusieurs pièces de production.

Comme illustré à la figure 1d, chaque au moins un appareil de mesure 4a, 4b présente un corps d'appareil 42a, 42b qui lui est propre. L'outil de mesure 1 comporte deux appareils de mesure dont les corps 42a, 42b sont mécaniquement reliés entre eux de manière que lors du déplacement d'un des appareils de mesure 4a, 4b par rapport aux premier et second moyens de centrage 6a, 6b, tous les corps 42a, 42b de ces appareils de mesure soient alors déplacés ensemble par rapport à ces premier et second moyens de centrage 6a, 6b.

Chacun des corps des appareils de mesure est relié à la platine 55 par des moyens élastiques 56a, 56b. Chaque moyen élastique 56a, 56b est agencé pour exercer un effort élastique de retour dans une position fixe par rapport à la platine 5, d'un corps d'appareil de mesure 42a, 42b qui lui correspond. Ainsi, en cas de choc contre un appareil de mesure, son corps peut se déplacer par rapport à la platine puis revenir dans une position initiale par rapport à cette platine 5. Ici chaque moyen élastique est réalisé par un anneau ouvert plaquant entre eux, une portion d'un corps d'un appareil de mesure qui lui correspond contre une portion correspondante de la platine 5.

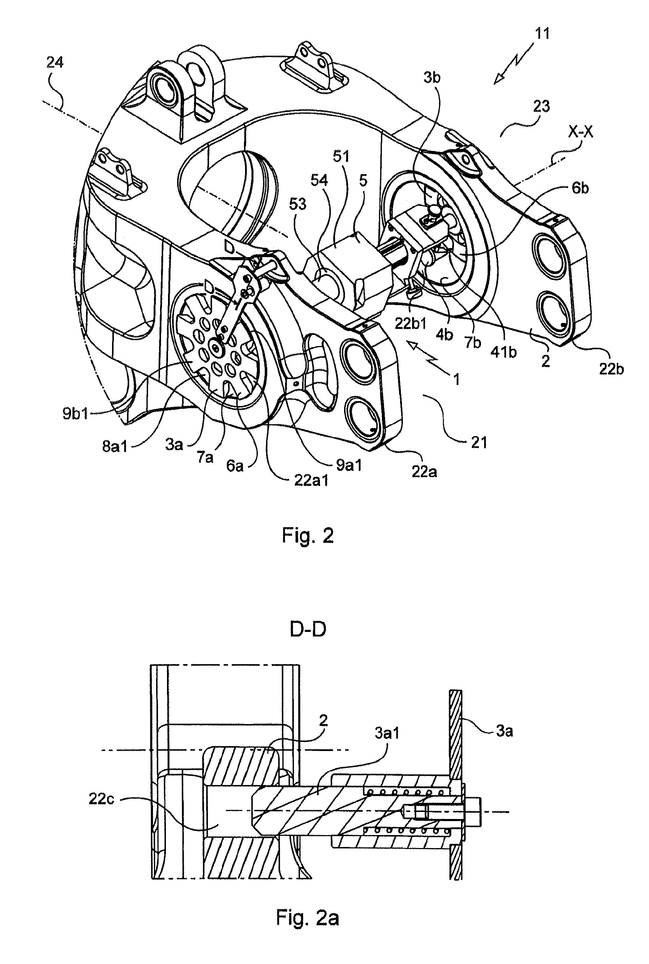

Enfin, comme on le voit en particulier sur les figures 2 et la coupe D-D de la figure 2a, l'outil de mesure présente un autre moyen d'indexation 3a permettant d'indexer à rotation par rapport à la pièce 2, l'outil 1 et en particulier son premier moyen de centrage 6a. Ce moyen d'indexation 3a particulier est réalisé par une tige 3a s'étendant depuis la première pièce d'appui 8a à laquelle elle est fixée, vers un alésage secondaire 22c de la pièce de production 2. Cette tige d'indexation 3a porte un index 3a1 monté sur ressort pour coulisser selon un axe de coulissement et sélectivement pénétrer dans l'alésage secondaire 22c qui est formé dans la pièce 2 à la périphérie du premier alésage 22a1. Une fois cet index 3a1 positionné dans l'alésage secondaire 22c, la première pièce d'appui est alors orientée fixement par rapport à la pièce de production 2, ce qui prépositionne les zones de palpage possibles sur la pièce.

Cet indexe 3a1 peut ainsi servir de détrompeur pour prédéterminer une position de l'outil 1 sur la pièce 2.

Une des principales caractéristiques dimensionnelles que permet de mesurer l'outil 1 selon l'invention est la variation D de la distance entre la surfaces internes 7a, 7b de l'un au moins des premier et second alésages cylindriques 22a1, 22b1 par rapport à l'axe X-X selon lequel s'étendent ces alésages coaxiaux.

Si la mesure de cette variation de distance D est réalisée en déplaçant les appareils de mesure selon un axe de guidage 52 sensiblement parallèle à l'axe X-X, alors les points palpés des alésages s'étendent dans un même plan passant par les axes 52 et X-X.

La variation D ainsi mesurée peut être utilisée pour mesurer :
- une épaisseur d'une couche de revêtement interne de l'alésage, par exemple en mesurant la variation D observée entre un point de l'alésage ne comportant pas de couche de revêtement et un autre point de l'alésage comportant cette couche de revêtement, ou encore en comparant des mesures réalisées avant et après réalisation de la couche; et/ou
- un parallélisme de la surface d'alésage par rapport à l'axe X-X.

Si la mesure de cette variation de distance D est réalisée en déplaçant les appareils de mesure par rotation autour de l'axe de guidage 52, sans que ces appareils de mesure 4a, 4b ne soient translatés le long de cet axe 52, alors, les points palpés des alésages s'étendent alors dans un plan perpendiculaire aux axes 52 et X-X.

La variation D ainsi mesurée peut être utilisée pour mesurer :
- une variation ou l'épaisseur de couche de revêtement des alésages 22a1, 22a2 ; et/ou
- une coaxialité des surfaces internes 7a, 7b respectives des premier et second alésages 22a1, 22a2 par rapport à l'axe X-X ; et/ou
- une cylindricité des alésages 22a1, 22a2 ; et/ou
- une coaxialité entre ces alésages 22a1 et 22b1.

Bien que les rainures 62 des moyens d'indexation 6 décrit ci-avant soient uniquement destinées à réaliser un guidage axial selon l'axe 52, il est aussi envisageable d'avoir des moyens d'indexation axiale agencés pour autoriser la rotation autour de l'axe 52 tout en interdisant le coulissement axial des appareils de mesure par rapport à l'axe 52. Ce dernier mode est utile pour réaliser une mesure sur toute la périphérie d'un alésage de la pièce de production 2.

Enfin, bien que les alésages 22a1, 22b1 de la pièce de production 2 décrite ci-avant soient destinés au passage d'un pivot de balancier d'atterrisseur d'aéronef, il est aussi possible que de tels alésages servent au passage d'un essieu d'atterrisseur d'aéronef.

## Revendications

1. Outil de mesure (1) de caractéristiques dimensionnelles (D) d'une pièce de production (2), cet outil (1) comportant :
- des moyens de positionnement (3a, 3b) de l'outil de mesure (1) par rapport à la pièce de production (2);
- au moins un appareil de mesure (4a, 4b) relié mécaniquement aux moyens de positionnement (3a, 3b) par des moyens de liaison mécanique (5) entre ledit au moins un appareil de mesure (4a, 4b) et les moyens de positionnement (3a, 3b); **caractérisé en ce que** les moyens de positionnement (3a, 3b) de l'outil de mesure (1) comportent :
- des premiers moyens de centrage (6a) de l'outil (1) adaptés à venir en contact contre une surface interne (7a) d'un premier alésage cylindrique (22a1) de la pièce de production (2) de manière à être centrés vis-à-vis de ce premier alésage (22a1) ;
- des seconds moyens de centrage (6b) de l'outil (1) adaptés à venir en contact contre une surface interne (7b) d'un second alésage cylindrique (22b1) de la pièce de production (2) de manière à être centrés vis-à-vis de ce second alésage (22b1), ces premier et second alésages (22a1, 22b1) étant coaxiaux ; et **en ce que**
les moyens de liaison mécanique (5) sont agencés pour autoriser le déplacement relatif de l'appareil de mesure (4a, 4b) par rapport aux premiers et seconds moyens de centrage (6a, 6b) de manière que ledit au moins un appareil de mesure (4a, 4b) puisse palper successivement plusieurs points d'au moins une des surfaces internes (7a, 7b) des premier ou second alésages (22a1, 22b1) alors que ces premiers et seconds moyens de centrage (6a, 6b) sont en contact contre les surfaces internes (7a, 7b) respectives de ces premier et second alésages et positionnent l'outil (1) par rapport à la pièce de production (2).

2. Outil de mesure (1) selon la revendication 1, dans lequel :
- les premiers moyens de centrage (6a) présentent une première pièce d'appui (8a) dotée de surfaces d'appui (9a1, 9a2) agencées pour pouvoir venir en appui contre la surface interne (7a) dudit premier alésage (22a1);
- les seconds moyens de centrage (6b) présentent une seconde pièce d'appui (8b) dotée surfaces d'appui (9b1) agencées pour pouvoir venir en appui contre la surface interne (7b) dudit second alésage (22b1);
- les moyens de positionnement (5) de l'outil de mesure (1) comportant des moyens de serrage (30) agencés pour pouvoir exercer un effort de serrage des première et seconde pièces d'appui (8a, 8b) de manière que la pièce de production (2) puisse être serrée entre ces première et seconde pièces d'appui (8a, 8b) alors que ces première et seconde pièces d'appui (8, 8b) sont respectivement en appui contre les surfaces internes (7a, 7b) des premier et second alésages (22a1, 22b1).

3. Outil de mesure selon la revendication 2, dans lequel,
- la première pièce d'appui (8a) comporte plusieurs surfaces d'appui (9a1, 9a2) appartenant à un même premier tronc de cône (10a) ; et
- la seconde pièce d'appui (8b) comporte plusieurs surfaces d'appui (9b1) appartenant à un même second tronc de cône (10a) coaxial du premier tronc de cône (10b), ces première et seconde pièces d'appui (8a, 8b) étant orientées l'une par rapport à l'autre de manière à être disposées entre les bases (Ba, Bb) respectives des premier et second troncs de cônes (10a, 10b).

4. Outil de mesure (1) selon l'une au moins des revendications 2 ou 3 dans lequel, la première pièce d'appui (8a) présente des échancrures périphériques (8a1) disposées entre certaines au moins des surfaces d'appui (9a1, 9a2) de cette première pièce (8a) de manière à permettre le passage au travers de certaines au moins de ces échancrures (8a1, 8b1), d'un palpeur mécanique (41a, 41b) appartenant audit au moins un appareil de mesure 4a, 4b).

5. Outil de mesure (1) selon l'une au moins des revendications précédentes, dans lequel les moyens de liaison mécanique (5) entre l'appareil de mesure (4a, 4b) et les moyens de positionnement (3a, 3b) comportent un guide (51) définissant un axe de guidage (52) agencé pour guider le déplacement dudit au moins un appareil de mesure (4a, 4b) le long de l'axe de guidage (52) et/ou pour guider en rotation le déplacement dudit au moins un appareil de mesure (4a, 4b) autour dudit axe de guidage (52).

6. Outil de mesure (1) selon la revendication 5, dans lequel les moyens de liaison mécanique (5) entre l'appareil de mesure (4a, 4b) et les moyens de positionnement (3a, 3b) présentent des moyens d'indexation en position (6) dudit appareil de mesure (4a, 4b) par rapport audit axe de guidage (52), ces moyens d'indexation (6) étant agencés pour définir plusieurs positions d'orientation dudit au moins un appareil de mesure (4a, 4b) par rapport à l'axe de guidage (52), ces positions d'orientation étant disposées autour de l'axe de guidage (52).

7. Outil de mesure selon l'une au moins des revendications précédentes combinée aux revendications 3 et 5, dans lequel l'axe de guidage (52) est coaxial des premier et second troncs de cônes (10a, 10b) et dans lequel les moyens d'indexation (6) sont agencés pour indexer à rotation ledit au moins un appareil de mesure (4a, 4b) autour de l'axe de guidage (52) tout en autorisant son coulissement le long de ce dit axe de guidage (52) de manière à ce que l'appareil de mesure (4a, 4b) puisse palper plusieurs points de la surface interne (7a, 7b) de l'alésage correspondant (22a1, 22b1) qui sont alignés entre eux et sont placés dans un même plan d'orientation dans lequel s'étend l'axe de guidage (52).

8. Outil selon l'une quelconque des revendications précédentes, dans lequel chaque au moins un appareil de mesure (4a, 4b) présente un corps d'appareil (42a, 42b) qui lui est propre, l'outil de mesure (1) comportant plusieurs appareils de mesure (4a, 4b) dont les corps (42a, 42b) sont mécaniquement reliés entre eux de manière que lors du déplacement d'un des appareils de mesure (4a, 4b) par rapport aux premier et second moyens de centrage (6a, 6b), tous les corps (42a, 42b) de ces appareils de mesure (4a, 4b) soient déplacés ensemble par rapport à ces premier et second moyens de centrage (6a, 6b).

9. Outil selon la revendication 8, dans lequel les corps (42a, 42b) des appareils de mesure (4a, 4b) sont chacun reliés à une même platine (55) par des moyens élastiques, chaque moyen élastique (56a, 56b) étant agencé pour exercer un effort élastique de retour dans une position fixe par rapport à la platine (55) du corps d'appareil de mesure qui lui correspond.

10. Ensemble (11) comportant ledit outil de mesure (1) selon l'une quelconque des revendications précédentes et ladite pièce de production (2), les premiers moyens de centrage (6a) de l'outil (1) étant en contact contre la surface interne (7a, 7b) du premier alésage (22a1) de la pièce de production (2) de manière à être centrés vis-à-vis de ce premier alésage (22a1) et les seconds moyens de centrage (6b) de l'outil (1) étant en contact contre la surface interne du second alésage (22b1) de la pièce de production de manière à être centrés vis-à-vis de ce second alésage (22b1) qui est coaxial du premier alésage (22a1), ledit au moins un appareil de mesure (4a, 4b) étant placé entre les premier et second alésages (22a1, 22b1) et entre lesdits premiers et seconds moyens de centrage (6a, 6b), lesdits moyens de liaison mécanique (5) entre ledit au moins un appareil de mesure (4a, 4b) et les moyens de positionnement (5) étant adaptés à déplacer ledit appareil de mesure (4a, 4b) entre ces premier et second alésages (22a1, 22b1) pour qu'il puisse palper successivement plusieurs points alignés dans un même plan d'alignement et appartenant à au moins une desdites surfaces internes (7a, 7b).

11. Procédé pour mesurer des caractéristiques dimensionnelles de premier et second alésages cylindriques coaxiaux (22a1, 22b1) formés dans une pièce de production (2), ces alésages (22a1, 22b1) étant disposés de part et d'autre d'une zone évidée (21) de la pièce de production (2) et chacun de ces alésages (22a1, 22b1) débouchant d'une part dans cette zone évidée (21) et d'autre part à la périphérie (23) de la pièce de production (2), le procédé comprenant :
a) le positionnement, par rapport à la pièce de production (2), de l'outil de mesure (1) selon l'une quelconque des revendications 1 à 9 de manière à ce que :
- les premiers moyens de centrage (6a) de l'outil soient en contact contre une surface interne (7a) du premier alésage (22a1); que
- les seconds moyens de centrage (6b) de l'outil soient en contact contre une surface interne (7b) d'un second alésage (22b1); puis
b) le déplacement de l'appareil de mesure (4a, 4b) par rapport à la pièce de production (2) alors que cet appareil de mesure est toujours relié aux moyens de positionnement (3a, 3b) par lesdits moyens de liaison mécanique (5) et alors que les premiers et seconds moyens de centrage (6a, 6b) sont toujours fixement positionnés par rapport à la pièce de production (2), ce déplacement étant tel que des moyens de palpage (41a, 41b) appartenant audit au moins un appareil de mesure (4a, 4b) palpent une succession de points appartenant à l'une des surfaces internes (7a, 7b) des premier ou second alésages (22a1, 22b1), ces points palpés s'étendant dans un même plan de palpage.

## Patentansprüche

1. Messwerkzeug (1) zum Messen der Maßeigenschaften (D) eines Produktionsteils (2), wobei dieses Werkzeug (1) umfasst:
- Positioniermittel (3a, 3b) zum Positionieren des Messwerkzeuges (1) in Bezug auf das Produktionsteil (2);
- mindestens ein Messgerät (4a, 4b), das mechanisch mit den Positioniermitteln (3a, 3b) über mechanische Verbindungsmittel (5) zwischen dem mindestens einen Messgerät (4a, 4b) und den Positioniermitteln (3a, 3b) verbunden ist; **dadurch gekennzeichnet, dass** die Positioniermittel (3a, 3b) zum Positionieren des Messwerkzeuges (1) umfassen:
- erste Zentriermittel (6a) zum Zentrieren des Werkzeuges (1), die dazu geeignet sind, mit einer Innenfläche (7a) einer ersten zylindrischen Bohrung (22a1) des Produktionsteils (2) derart in Kontakt zu kommen, dass sie gegenüber dieser ersten Bohrung (22a1) zentriert sind;
- zweite Zentriermittel (6b) zum Zentrieren des Werkzeuges (1), die dazu geeignet sind, mit einer Innenfläche (7b) einer zweiten zylindrischen Bohrung (22b1) des Produktionsteils (2) derart in Kontakt zu kommen, dass sie gegenüber dieser zweiten Bohrung (22b1) zentriert sind, wobei diese erste und diese zweite Bohrung (22a1, 22b1) zueinander koaxial sind; und dass
die mechanischen Verbindungsmittel (5) so ausgebildet sind, dass sie die relative Verschiebung des Messgeräts (4a, 4b) in Bezug auf die ersten und die zweiten Zentriermittel (6a, 6b) derart gestatten, dass das genannte mindestens eine Messgerät (4a, 4b) nacheinander mehrere Punkte mindestens einer der Innenflächen (7a, 7b) der ersten oder der zweiten Bohrung (22a1, 22b1) abtasten kann, während diese ersten und diese zweiten Zentriermittel (6a, 6b) in Kontakt mit den jeweiligen Innenflächen (7a, 7b) dieser ersten und dieser zweiten Bohrung sind und das Werkzeug (1) in Bezug auf das Produktionsteil (2) positionieren.

2. Messwerkzeug (1) nach Anspruch 1, wobei:
- die ersten Zentriermittel (6a) ein erstes Anlageteil (8a) aufweisen, das mit Anlageflächen (9a1, 9a2) versehen ist, die so ausgebildet sind, dass sie an der Innenfläche (7a) der ersten Bohrung (22a1) zur Anlage kommen können;
- die zweiten Zentriermittel (6b) ein zweites Anlageteil (8b) aufweisen, das mit Anlageflächen (9b1) versehen ist, die so ausgebildet sind, dass sie an der Innenfläche (7b) der zweiten Bohrung (22b1) zur Anlage kommen können;
- die Positioniermittel (5) des Messwerkzeugs (1) Spannmittel (30) umfassen, die so ausgebildet sind, dass sie eine Spannkraft zum Festspannen des ersten und des zweiten Anlageteils (8a, 8b) derart ausüben können, dass das Produktionsteil (2) zwischen diesem ersten und diesem zweiten Anlageteil (8a, 8b) festgespannt werden kann, während dieses erste und dieses zweite Anlageteil (8a, 8b) an den Innenflächen (7a, 7b) der ersten bzw. der zweiten Bohrung (22a1, 22b1) in Anlage sind.

3. Messwerkzeug nach Anspruch 2, wobei
- das erste Anlageteil (8a) mehrere Anlageflächen (9a1, 9a2) umfasst, die zu einem selben ersten Kegelstumpf (10a) gehören; und
- das zweite Anlageteil (8b) mehrere Anlageflächen (9b1) umfasst, die zu einem selben zweiten Kegelstumpf (10a) gehören, der koaxial zum ersten Kegelstumpf (10b) ist, wobei dieses erste und dieses zweite Anlageteil (8a, 8b) zueinander derart ausgerichtet sind, dass sie zwischen den jeweiligen Basen (Ba, Bb) des ersten und des zweiten Kegelstumpfs (10a, 10b) angeordnet sind.

4. Messwerkzeug (1) nach mindestens einem der Ansprüche 2 oder 3, wobei das erste Anlageteil (8a) Umfangsaussparungen (8a1) aufweist, die zwischen zumindest einigen der Anlageflächen (9a1, 9a2) dieses ersten Teils (8a) derart angeordnet sind, dass sie den Durchtritt durch zumindest einige dieser Aussparungen (8a1, 8b1) gestatten, wobei ein mechanischer Fühler (41a, 41b) zu dem mindestens einen Messgerät (4a, 4b) gehört.

5. Messwerkzeug (1) nach mindestens einem der vorhergehenden Ansprüche, wobei die mechanischen Verbindungsmittel (5) zur mechanischen Verbindung zwischen dem Messgerät (4a, 4b) und den Positioniermitteln (3a, 3b) eine Führung (51) umfassen, die eine Führungsachse (52) definiert, die so ausgebildet ist, dass sie die Verschiebung des mindestens einen Messgeräts (4a, 4b) entlang der Führungsachse (52) führt und/oder dass sie die Verschiebung des mindestens einen Messgeräts (4a, 4b) um die Führungsachse (52) in Rotation führt.

6. Messwerkzeug (1) nach Anspruch 5, wobei die mechanischen Verbindungsmittel (5) zur mechanischen Verbindung zwischen dem Messgerät (4a, 4b) und den Positioniermitteln (3a, 3b) Positionsindexierungsmittel (6) zur Positionsindexierung des Messgeräts (4a, 4b) in Bezug auf die Führungsachse (52) aufweisen, wobei diese Indexierungsmittel (6) so ausgebildet sind, dass sie mehrere Ausrichtungspositionen des mindestens einen Messgeräts (4a, 4b) in Bezug auf die Führungsachse (52) definieren, wobei diese Ausrichtungspositionen um die Führungsachse (52) herum angeordnet sind.

7. Messwerkzeug nach mindestens einem der vorhergehenden Ansprüche in Kombination mit den Ansprüchen 3 und 5, wobei die Führungsachse (52) koaxial zu dem ersten und dem zweiten Kegelstumpf (10a, 10b) ist, und wobei die Indexierungsmittel (6) so ausgebildet sind, dass sie das mindestens eine Messgerät (4a, 4b) um die Führungsachse (52) herum in Drehung indexieren, während sie sein Gleiten entlang dieser Führungsachse (52) derart gestatten, dass das Messgerät (4a, 4b) mehrere Punkte der Innenfläche (7a, 7b) der entsprechenden Bohrung (22a1, 22b1) abtasten kann, die miteinander ausgerichtet und in einer selben Ausrichtungsebene angeordnet sind, in der sich die Führungsachse (52) erstreckt.

8. Werkzeug nach einem der vorhergehenden Ansprüche, wobei jedes zumindest eine Messgerät (4a, 4b) ein Gerätegehäuse (42a, 42b) aufweist, das ihm eigen ist, wobei das Messwerkzeug (1) mehrere Messgeräte (4a, 4b) umfasst, deren Gehäuse (42a, 42b) mechanisch derart untereinander verbunden sind, dass während der Verschiebung eines der Messgeräte (4a, 4b) in Bezug auf die ersten und die zweiten Zentriermittel (6a, 6b) alle Gehäuse (42a, 42b) dieser Messgeräte (4a, 4b) gemeinsam in Bezug auf diese ersten und diese zweiten Zentriermittel (6a, 6b) verschoben werden.

9. Werkzeug nach Anspruch 8, wobei die Gehäuse (42a, 42b) der Messgeräte (4a, 4b) jeweils über elastische Mittel mit einer selben Platine (55) verbunden sind, wobei jedes elastische Mittel (56a, 56b) so ausgebildet ist, dass es eine elastische Rückstellkraft in eine ortsfeste Position in Bezug auf die Platine (55) des Gehäuse des Messgeräts, das ihm entspricht, ausübt.

10. Einheit (11), umfassend das Messwerkzeug (1) nach einem der vorhergehenden Ansprüche und das Produktionsteil (2), wobei die ersten Zentriermittel (6a) des Werkzeuges (1) derart in Kontakt mit der Innenfläche (7a, 7b) der ersten Bohrung (22a1) des Produktionsteils (2) sind, dass sie gegenüber dieser ersten Bohrung (22a1) zentriert sind, und die zweiten Zentriermittel (6b) des Werkzeuges (1) derart in Kontakt mit der Innenfläche der zweiten Bohrung (22b1) des Produktionsteils sind, dass sie gegenüber dieser zweiten Bohrung (22b1) zentriert sind, die koaxial zur ersten Bohrung (22a1) ist, wobei das mindestens eine Messgerät (4a, 4b) zwischen der ersten und der zweiten Bohrung (22a1, 22b1) und zwischen den ersten und den zweiten Zentriermitteln (6a, 6b) angeordnet ist, wobei die mechanischen Verbindungsmittel (5) zur mechanischen Verbindung zwischen dem mindestens einen Messgerät (4a, 4b) und den Positioniermitteln (5) dazu geeignet sind, das genannte Messgerät (4a, 4b) zwischen dieser ersten und dieser zweiten Bohrung (22a1, 22b1) zu verschieben, damit es nacheinander mehrere Punkte abtasten kann, die in einer selben Ausrichtungsebene ausgerichtet sind und zu mindestens einer der Innenflächen (7a, 7b) gehören.

11. Verfahren zum Messen der Maßeigenschaften von ersten und zweiten zylindrischen zueinander koaxialen Bohrungen (22a1, 22b1), die in einem Produktionsteil (2) ausgebildet sind, wobei diese Bohrungen (22a1, 22b1) zu beiden Seiten eines ausgesparten Bereichs (21) des Produktionsteils (2) angeordnet sind und jede dieser Bohrungen (22a1, 22b1) einerseits in diesen ausgesparten Bereich (21) mündet und andererseits am Umfang (23) des Produktionsteils (2), wobei das Verfahren umfasst:
a) die Positionierung des Messwerkzeuges (1) nach einem der Ansprüche 1 bis 9 in Bezug auf das Produktionsteil (2) derart, dass:
- die ersten Zentriermittel (6a) des Werkzeuges in Kontakt mit einer Innenf(äche (7a) der ersten Bohrung (22a1) sind; dass
- die zweiten Zentriermittel (6b) des Werkzeuges in Kontakt mit einer Innenfläche (7b) einer zweiten Bohrung (22b1) sind; und daraufhin
b) die Verschiebung des Messgeräts (4a, 4b) in Bezug auf das Produktionsteil (2), während dieses Messgerät immer über die mechanischen Verbindungsmittel (5) mit den Positioniermitteln (3a, 3b) verbunden ist, und während die ersten und die zweiten Zentriermittel (6a, 6b) immer fest in Bezug auf das Produktionsteil (2) positioniert sind, wobei diese Verschiebung derart ist, dass die Tastmittel (41a, 41b), die zu dem mindestens einen Messgerät (4a, 4b) gehören, eine Folge von Punkten abtasten, die zu einer der Innenflächen (7a, 7b) der ersten oder der zweiten Bohrung (22a1, 22b1) gehören, wobei sich diese abgetasteten Punkte in einer selben Abtastebene erstrecken.

## Claims

1. Measuring tool (1) for measuring dimensional characteristics (D) of a production part (2), this tool (1) comprising:
- means (3a, 3b) for positioning the measuring tool (1) relative to the production part (2);
- at least one measuring apparatus (4a, 4b) mechanically linked to the positioning means (3a, 3b) by mechanical link means (5) between said at least one measuring apparatus (4a, 4b) and the positioning means (3a, 3b); **characterized in that** the means (3a, 3b) for positioning the measuring tool (1) comprise:
- first centring means (6a) of the tool (1) suitable for coming into contact against an inner surface (7a) of a first cylindrical bore (22a1) of the production part (2) for centering said first centring means relative to said first bore (22a1) ;
- second centring means (6b) of the tool (1) suitable for coming into contact against an inner surface (7b) of a second cylindrical bore (22b1) of the production part (2) for centering said second centring means relative to said second bore (22b1), these first and second bores (22a1, 22b1) being coaxial; and **in that**
the mechanical link means (5) are arranged to allow the relative displacement of the measuring apparatus (4a, 4b) relative to the first and second centring means (6a, 6b) so that said at least one measuring apparatus (4a, 4b) can successively touch a plurality of points of at least one of the inner surfaces (7a, 7b) of the first or second bore (22a1, 22b1) while these first and second centring means (6a, 6b) are in contact against the respective inner surfaces (7a, 7b) of these first and second bores and position the tool (1) relative to the production part (2).

2. Measuring tool (1) according to Claim 1, in which:
- the first centring means (6a) have a first bearing part (8a) provided with bearing surfaces (9a1, 9a2) arranged to be able to come to bear against the inner surface (7a) of said first bore (22a1);
- the second centring means (6b) have a second bearing part (8b) provided with bearing surfaces (9b1) arranged to be able to come to bear against the inner surface (7b) of said second bore (22b1);
- the means (3a, 3b) for positioning the measuring tool (1) comprising clamping means (30) arranged to be able to exert a clamping force of the first and second bearing parts (8a, 8b) so that the production part (2) can be clamped between these first and second bearing parts (8a, 8b) while these first and second bearing parts (8a, 8b) are respectively bearing against the inner surfaces (7a, 7b) of the first and second bores (22a1, 22b1).

3. Measuring tool according to Claim 2, in which,
- the first bearing part (8a) comprises a plurality of bearing surfaces (9a1, 9a2) belonging to a same first frustum (10a); and
- the second bearing part (8b) comprises a plurality of bearing surface (9b1) belonging to a same second frustum (10b) coaxial to the first frustum (10a), these first and second bearing parts (8a, 8b) being oriented relative to one another in such a way as to be arranged between the respective bases (Ba, Bb) of the first and second frustums (10a, 10b).

4. Measuring tool (1) according to at least one of Claims 2 and 3, in which the first bearing part (8a) has peripheral cut-outs (8a1) arranged between at least some of the bearing surfaces (9a1, 9a2) of this first part (8a) so as to allow the passage, through at least some of these cut-outs (8a1, 8b1), of a mechanical tracer (41a, 41b) belonging to said at least one measuring apparatus (4a, 4b).

5. Measuring tool (1) according to at least one of the preceding claims, in which the mechanical link means (5) between the measuring apparatus (4a, 4b) and the positioning means (3a, 3b) comprise a guide (51) defining a guiding axis (52) arranged to guide the displacement of said at least one measuring apparatus (4a, 4b) along the guiding axis (52) and/or to rotationally guide the displacement of said at least one measuring apparatus (4a, 4b) about said guiding axis (52).

6. Measuring tool (1) according to Claim 5, in which the mechanical link means (5) between the measuring apparatus (4a, 4b) and the positioning means (3a, 3b) have position indexing means (6) for positioning said measuring apparatus (4a, 4b) relative to said guiding axis (52), these indexing means (6) being arranged to define a plurality of positions of orientation of said at least one measuring apparatus (4a, 4b) relative to the guiding axis (52), these positions of orientation being arranged about the guiding axis (52).

7. Measuring tool according to at least one of the preceding claims combined with Claims 3 and 5, in which the guiding axis (52) is coaxial to the first and second frustums (10a, 10b) and in which the indexing means (6) are arranged to rotationally index said at least one measuring apparatus (4a, 4b) about the guiding axis (52) while allowing it to slide along this said guiding axis (52) so that the measuring apparatus (4a, 4b) can touch a plurality of points of the inner surface (7a, 7b) of the corresponding bore (22a1, 22b1) which are mutually aligned and are placed in a same plane of orientation in which the guiding axis (52) extends.

8. Tool according to any one of the preceding claims, in which each at least one measuring apparatus (4a, 4b) has an apparatus body (42a, 42b) which is specific to it, the measuring tool (1) comprising a plurality of measuring apparatuses (4a, 4b) with bodies (42a, 42b) that are mechanically linked together so that, during the displacement of one of the measuring apparatuses (4a, 4b) relative to the first and second centring means (6a, 6b), all the bodies (42a, 42b) of these measuring apparatuses (4a, 4b) are displaced together relative to these first and second centring means (6a, 6b).

9. Tool according to Claim 8, in which the bodies (42a, 42b) of the measuring apparatuses (4a, 4b) are each linked to a same plate (55) by elastic means, each elastic means (56a, 56b) being arranged to exert an elastic return force in a fixed position relative to the plate (55) of the measuring apparatus body which corresponds to it.

10. Assembly (11) comprising said measuring tool (1) according to any one of the preceding claims and said production part (2), the first centring means (6a) of the tool (1) being in contact against the inner surface (7a, 7b) of the first bore (22a1) of the production part (2) so as to be centred with respect to this first bore (22a1) and the second centring means (6b) of the tool (1) being in contact against the inner surface of the second bore (22b1) of the production part so as to be centred with respect to this second bore (22b1) which is coaxial to the first bore (22a1), said at least one measuring apparatus (4a, 4b) being placed between the first and second bores (22a1, 22b1) and between said first and second centring means (6a, 6b), said mechanical link means (5) between said at least one measuring apparatus (4a, 4b) and the positioning means (5) being suitable for displacing said measuring apparatus (4a, 4b) between these first and second bores (22a, 22b1) so that it can successively touch a plurality of points aligned in a same plane of alignment and belonging to at least one of said inner surfaces (7a, 7b).

11. Method for measuring dimensional characteristics of first and second coaxial cylindrical bores (22a1, 22b1) formed in a production part (2), these bores (22a1, 22b1) being arranged on either side of an open area (21) of the production part (2) and each of these bores (22a1, 22b1) emerging on the one hand in this open area (21) and on the other hand at the periphery (23) of the production part (2), the method comprising:
a) the positioning, relative to the production part (2), of the measuring tool (1) according to any one of Claims 1 to 9 so that:
- the first centring means (6a) of the tool are in contact against an inner surface (7a) of the first bore (22a1); that
- the second centring means (6b) of the tool are in contact against an inner surface (7b) of a second bore (22b1); then
b) the displacement of the measuring apparatus (4a, 4b) relative to the production part (2) while this measuring apparatus is still linked to the positioning means (3a, 3b) by said mechanical link means (5) and while the first and second centring means (6a, 6b) are still fixedly positioned relative to the production part (2), this displacement being such that the tracing means (41a, 41b) belonging to said at least one measuring apparatus (4a, 4b) touch a succession of points belonging to one of the inner surfaces (7a, 7b) of the first or second bore (22a1, 22b1), these touched points extending in a same tracing plane.
